# EUROPEAN PATENT SPECIFICATION

(11) **EP 4 493 113 B1**
(45) Date of publication and mention of the grant of the patent: **09.09.2026**
(21) Application number: 23708253.2
(22) Date of filing: 07.03.2023
(51) Int. Cl.: A61C 19/04, A61C 1/08

(54) **DENTAL TREATMENT SYSTEM FOR LOCATING THE APEX OF A TOOTH**
ZAHNBEHANDLUNGSSYSTEM ZUM AUFFINDEN DER SPITZE EINES ZAHNES
SYSTÈME DE TRAITEMENT DENTAIRE POUR LOCALISER LE SOMMET D'UNE DENT

(30) Priority: 14.03.2022 EP 22161777
(43) Date of publication of application: 22.01.2025
(73) Proprietor: Sirona Dental Systems GmbH, 64625 Bensheim (DE); DENTSPLY SIRONA Inc., York, PA 17401 (US)
(72) Inventor: HILL, Volker, 64625 Bensheim (DE)
(74) Representative: Aldridge, Henry Alexander
(86) International application number: PCT/EP2023/055666
(87) International publication number: WO 2023/174746

(56) References cited:
- US-A- 5 295 833
- US-A- 5 902 105
- US-A1- 2008 182 223
- US-A1- 2008 241 783

## Description

### TECHNICAL FIELD OF THE INVENTION

The present invention relates to a system for locating the apex of a patient's tooth for the purpose of root canal treatment.

### BACKGROUND ART OF THE INVENTION

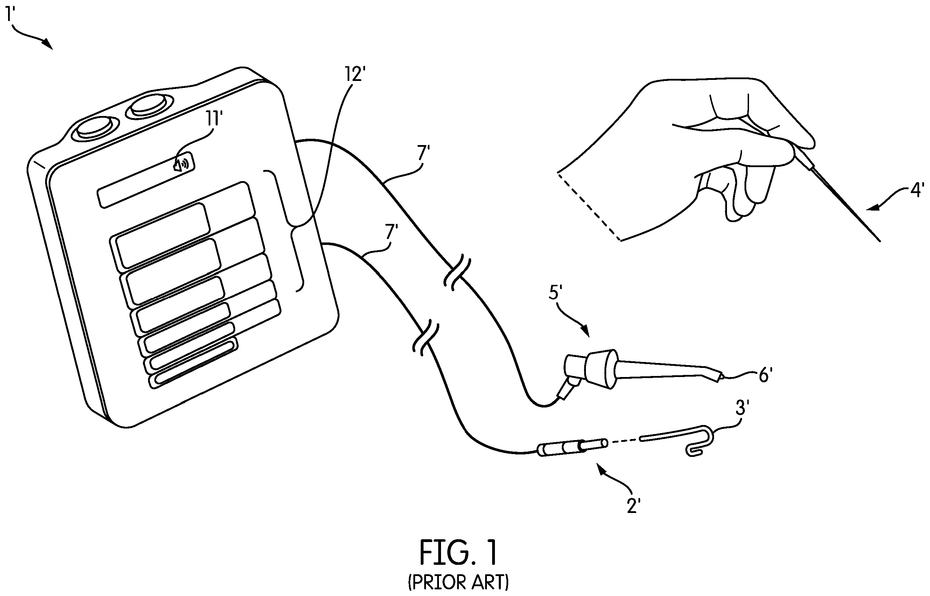

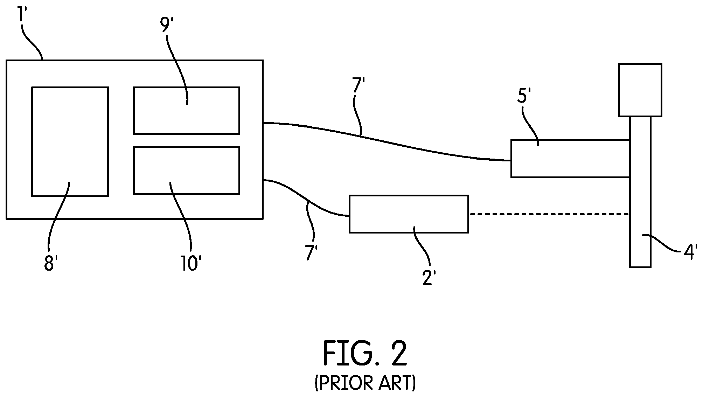

Root canal treatment also known as endodontic treatment, involves the removal of the infected dental pulp such as the nerves, the blood vessels, and other cellular tissues from the tooth. Fig 1 shows a prior art endodontic file (4') which can be manually used to remove the infected pulp particularly from the root canal of the tooth. The root canals generally vary in length. Therefore, the position of the endodontic file (4') relative to the tooth apex must be precisely determined. The tooth has an electrical impedance which can be measured with an electronical measurement device commonly known as an apex locator. Fig 1 shows a prior art apex locator (1'). The apex locator (1') is usually provided as a tabletop device. The use of the apex locator (1') during the endodontic treatment requires a closed electrical circuit which can be established through a couple of electrodes. As shown in the prior art system of Fig. 1, the first electrode (3') is provided as a lip clip (2') which is attachable to the lip of the patient. And the second electrode (6') is provided as an endodontic file clip (5') which is attachable to the endodontic file (4') that is to be manually advanced into the root canal of the tooth. The electrical impedance between the lip clip (2') and the endodontic file clip (5') changes with the increase of the endodontic file engagement inside the root canal located between the root canal entry and the apical constriction. The endodontic file clip (5') as well as the lip clip (2') are generally provided as separate devices which can be connected to the apex locator (1') through cables (7') with appropriate connectors (not shown). As schematically shown in Fig. 2, the apex locator (1') generally comprises an electrical measurement unit (8') and acoustical/optical output units (9', 10'). The electrical measurement unit (8') is connectable to the lip clip (2') and the endodontic file clip (5'), and is adapted to locate the apex of the tooth based on the measurement of the electrical impedance between the first electrode (3') and the second electrode (6'). The dashed line in Fig. 2 illustrates the closed electrical circuit established through the patient's lip and the root canal. The acoustical output unit (9') and the optical output unit (10') are respectively adapted to output a signal indicative of the location of the apex. As shown in Fig 1 and Fig. 2, the acoustical output unit (9') and the optical output unit (10') generally include a loudspeaker (I F) and a display (12') with one or more LEDs respectively. In the prior art applications, the level of distance to the apex is represented through of a visible distance indication on the display (12') or through a changing audible sound through the loudspeaker (11).

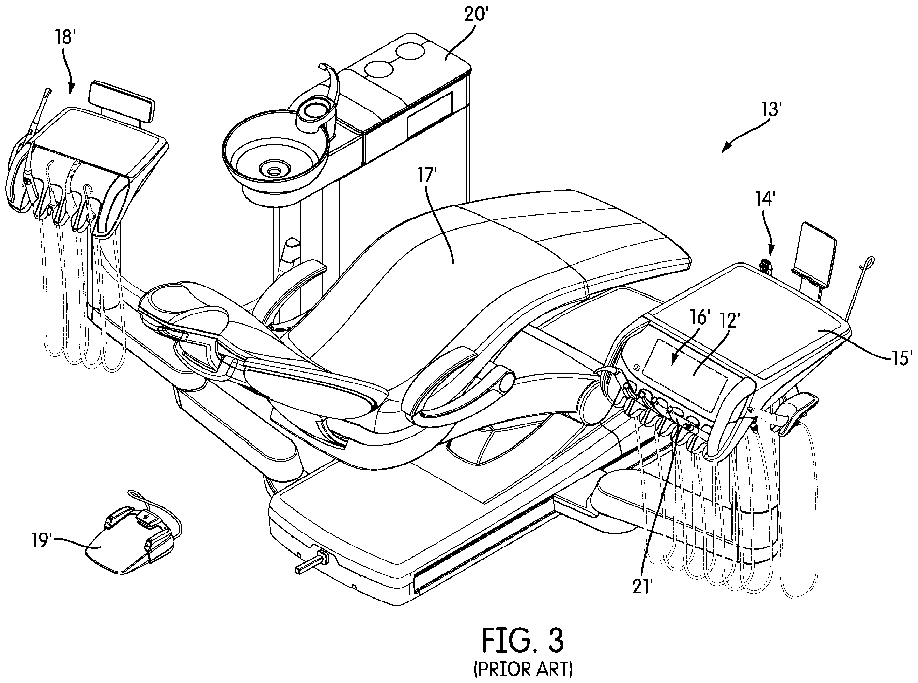

It is also commonly known to integrate the prior art apex locator into a dental treatment system. Fig 3 shows a prior art dental treatment system (13') which has an integrated apex locator, and a connector means (14) for connecting the lip clip and the endodontic file clip. This prior art dental treatment system (13') has an optical output unit whose display (12') is realized through the graphical user interface (16') in the dentist's tray (15'), and additionally has an acoustical output unit with a loudspeaker.

A problem of the prior art as shown Fig. 1 to Fig. 3, is that most patients feel stressed when they hear the rising acoustic signal as the dentist advances the endodontic file towards the apex. Moreover, the acoustic signal also disturbs the dentist at work. The stressed patients usually asks the dentist to turn off the acoustic signal. In such circumstances, the dentist must solely use the optical output unit, and thus starts intermittently watching the illumination either on the display (12') of the tabletop device in Fig. 1 or the display (12') on the dentist's tray (15') in Fig. 3. In both scenarios the dentist must turn his/her head in order to monitor the changes in the illumination state on the respective display (12'). However, when turning the head away from the patient's root canal towards the respective display (12'), it is likely that the dentist moves/aligns the endodontic file (4') to an incorrect position/direction within the root canal. However, this unfavorable situation impairs the endodontic treatment.

US2008/182223A1 intends to provide a dental diagnostic device capable of detecting whether or not an electric leakage path which departs from a root canal, bypassing an apex is contained in a conductive path. The dental diagnostic device includes a measuring electrode, an oral electrode, a measurement signal applying means, a measuring means and a detecting means. The measuring electrode is inserted into a root canal of a tooth which is a diagnosing object. The oral electrode is brought into electric contact with oral mucosa. The measurement signal applying means applies a measurement signal in between the measuring electrode and the oral electrode. The measuring means obtains data corresponding to the electric characteristic of at least part of a conductive path between the measuring electrode and the oral electrode based on measurement of electric response to the measurement signal. The detecting means detects to see whether or not an electric leakage path bypassing an apex of a tooth is contained in a conductive path by applying a predetermined determination standard to data.

US5295833A discloses dental root canal diagnostic and treating equipment.

US2008/241783A1 discloses a root canal length measuring apparatus and root canal therapy apparatus.

US5902105A discloses a dental treatment apparatus with a root canal length measurement function.

### DISCLOSURE OF THE INVENTION

An objective of the present invention is to overcome the disadvantages of the prior art and provide a dental treatment system which enables the dentist to locate the apex of a tooth in a safer and easier manner.

These objectives have been achieved through the dental treatment system as defined in claim 1. The subject-matters of the dependent claims relate to further developments and embodiments.

A major advantageous effect of the present invention is that in contrast the prior the art, the dentist does not have to take his eyes off the operating field, namely from the root canal and can be informed on the location of the apex solely through monitoring the illuminations state of the illuminating means of the motorized handheld dental device being used for the endodontic treatment. Another major advantageous effect of the present invention is that the dentist can completely dispense with the use of the acoustic signal, and thereby work without being disturbed by such acoustic signal, and thereby also the patient is relieved from the stress caused by the audible sound.

According to the present invention the illumination state may include at least one of the following: the on/off state of the illuminating means, the intensity of the visible light emitted by the illuminating means, and the color of the visible light emitted by the illuminating means. Thereby, the distance to the apex can be represented by adjusting the illumination state of the illuminating means with different light flashing frequencies, light colors, and/or light intensities in accordance with the different distance levels of the endodontic file to the apex.

In an embodiment, the on/off state of the illuminating means is varied. In this embodiment, the illumination state is initially ON prior to that the endodontic files touches the tooth, and starts turning ON/OFF with a relatively long OFF duration (e.g. 900ms) when the endodontic file initially contacts the tooth, and starts turning ON/OFF with a relatively medium OFF duration (e.g. 500ms) when the endodontic file gets closer to the apex, and starts turning ON/OFF with a relatively short OFF duration (e.g., 250ms) when the endodontic file gets very close to the tooth, and turns constantly OFF when the endodontic file reaches the apex. The above durations are provided as examples, different ON/OFF cycles may be used so as to enable the dentist to recognize that the distance to the apex gets gradually smaller.

In another embodiment, the intensity of the visible light emitted by the illuminating means is varied. In this embodiment, the illumination state is initially ON with a relatively high intensity prior to that the endodontic file touches the tooth, and starts becoming gradually less intense as the endodontic file gest closer and closer to the apex, and turns constantly OFF when the endodontic file reaches the apex.

In another embodiment, the color of the visible light emitted by illuminating means is varied. In this embodiment, the illumination state is initially ON with a particular cold color ( e.g., blue) prior to that the endodontic file touches the tooth, and start gradually changing its color from a relatively colder colors to warmer colors, such as green, yellow, orange, and red as the endodontic file gets gradually closer to the apex, and turns constantly OFF when the endodontic file reaches the apex.

According to the present invention the dental treatment system may have one or more modes for the endodontic treatment. The endodontic treatment modes can be selectively activated by the dentist preferably, via the graphical user interface on the dentist's tray of the dental treatment system. The graphical user interface preferably comprises a touch-sensitive screen for activating and selecting an endodontic treatment mode. Additionally, or alternately a footswitch of the dental treatment system may be used for the same purpose.

In an embodiment the dental treatment system has a first endodontic treatment mode in which the illuminating means of the motorized handheld dental device is used to indicate the location of the apex of the tooth through the illumination state. In this embodiment the lip clip is preferably connected to the dental treatment system via a connector means thereof. In this embodiment there is no need to use an endodontic file clip as the electrical circuit can be closed through the integrated second electrode of the motorized handheld dental device. The first endodontic treatment mode can be activated when the user removes the motorized handheld dental device having the endodontic file form the dentist's tray.

The dentist's tray has a sensor for detecting presence/absence of the motorized handheld dental device having the endodontic file. Alternatively, the first endodontic treatment mode can be activated through the graphical user interface or the footswitch. In this embodiment, the user may preferably set the torque to be applied to the endodontic file, the rotational speed of the endodontic file, and the rotational direction of the endodontic file through the graphical user interface and/or the footswitch during the first endodontic treatment mode.

In another embodiment, the dental treatment system has in addition to the first endodontic treatment mode optionally also a second endodontic treatment mode in which the endodontic file can be directly hold by the dentist without using the motorized handheld dental device, wherein a loudspeaker or the display of the graphical user interface of the dentist's tray is used to monitor the location of the apex in lieu of the illuminating means of the motorized handheld dental device as in the first endodontic treatment mode. The second endodontic treatment mode can be optionally used to locate the apex *without* using the motorized handheld dental device but by inserting the endodontic file into the root canal directly by holding it with the hand as commonly practiced in the prior art. In the second endodontic treatment mode, the lip clip is preferably connected to the dental treatment system via the connector means thereof. In the second endodontic treatment mode, the dentist also uses an endodontic file clip that is attachable to endodontic file. The endodontic file clip is also connectable to the connector means of the dental treatment system. The second endodontic treatment mode can be activated through the graphical user interface and/or the footswitch.

In an embodiment, the dental treatment system switches from the second endodontic treatment mode to the first endodontic treatment mode when the dentist removes the motorized handheld dental device having the endodontic file from the dentist's tray and vice versa. In this embodiment. the second endodontic treatment mode can be optionally used as a default mode for instance when the patient doesn't perceive the audible acoustic signal as burdensome or when the dentist decides to use the display on the graphical user interface of the dentist's tray.

### BRIEF DESCRIPTION OF THE DRAWINGS

In the subsequent description, the present invention will be described in more detail by using exemplary embodiments and by referring to the drawings, wherein
Fig. 1 - is a perspective view of a system having a tabletop apex locator for locating the apex of a tooth according to the prior art;
Fig. 2 - is a schematic view of the system for locating the apex of a patient's tooth according to the prior art;
Fig. 3 - is a perspective view of a dental treatment system for locating the apex of a tooth of a patient according to the prior art;
Fig. 4 - is a perspective view of a dental treatment system for locating the apex of a tooth of a patient according to an embodiment of the present invention;
Fig. 5 - is a partial perspective enlarged view of the dentist's tray of the dental treatment system of Fig.4;
Fig. 6 - is a partial perspective exploded view of a motorized handheld dental device of the dental treatment system of Fig. 4;
Fig. 7 - is another partial perspective enlarged view of the motorized handheld dental device having an endodontic file of the dental treatment system of Fig.4;
Fig. 8 - is a first endodontic treatment dialog on the graphical user interface of the dental treatment system of Fig.4;
Fig. 9 - is a second endodontic treatment dialog on the graphical user interface of dental treatment system of Fig.4;
Fig. 10 - shows an endodontic treatment of a patient by using the dental treatment system of Fig. 4 in the first endodontic treatment mode.

The reference numbers shown in the drawings denote the elements as listed below and will be referred to in the subsequent description of the exemplary embodiments.

| | | |
|---|---|---|
| 1. | Apex locator | |
| 2. | Lip clip | |
| 3. | First electrode | |
| 4. | Endodontic file | |
| 5. | Endodontic file clip | |
| 6. | 61. | Second electrode |
| 7. | Cable | |
| 8. | Electrical measurement unit | |
| 9. | Acoustical output unit | |
| 10. | Optical output unit | |
| 11. | Loudspeaker | |
| 12. | Display (LEDs) | |
| 13. | Dental treatment system | |
| 14. | Connector means | |
| 15. | Dentist's tray | |
| 16. | User interface | |
| 17. | Chair | |
| 18. | Assistant tray | |
| 19. | Foot switch | |
| 20. | Water unit | |
| 21. | Motorized handheld dental device (instrument) | |
| 22. | Housing | |
| 23. | Rotating hub | |
| 24. | Illuminating means (LED) | |
| 25. | Visible light | |
| 26. | Taskbar | |
| 27. | Grip portion | |
| 28. | Head portion | |
| 29. | Neck portion | |

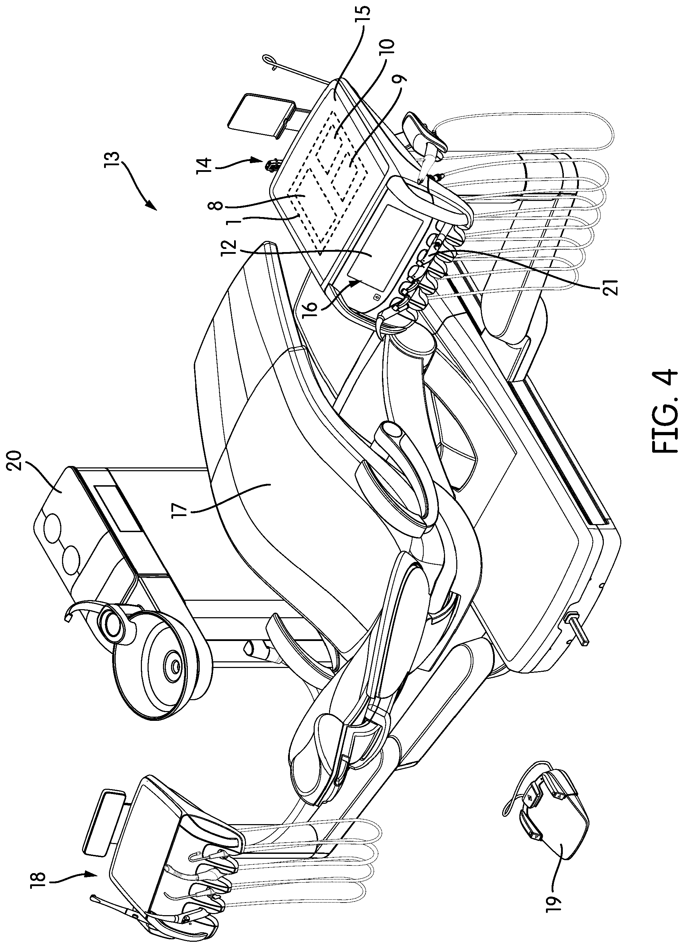

Fig. 4 shows a dental treatment system (13) according to an embodiment of the present invention. The dental treatment system (13) comprises: a chair (17) for seating a patient; a dentist's tray (15) with a plurality of claws for respectively holding various instruments to be used by the dentist during the dental treatment; an assistant's tray (18) with a plurality of claws for holding various instruments to be used by the assistant during the dental treatment; and a water unit (20) for cleaning the instruments and discharging the wastewater. A control unit (not shown) such as a PC is preferably provided inside the base of the chair (17) for controlling the overall operation of the dental treatment system (13). The dentist's tray (15) has a graphical user interface (16) with a touch-sensitive display (12) for enabling the dentist to selectively operate the various functionalities of the dental treatment system (13). The dental treatment system (13) also has a footswitch (19) for allowing the dentist to operate the various functionalities of the dental treatment system (13). Herein, in order to avoid prolongation of the description, the technical feature of the dental treatment system (13) other than those essential for understating the endodontic treatment will be omitted as these are commonly known to those skilled in the art.

### The endodontic treatment

The dental treatment system (13) of Fig. 4 can be used for the endodontic treatment, in particular for locating the apex of a patient's tooth. In the subsequent description, the dental treatment system (13) will be explained in more detail with respect to different endodontic treatment modes that are available to the dentist, and respective dialogs that appear on the graphical user interface (16).

### The first endodontic treatment mode and a first dialog

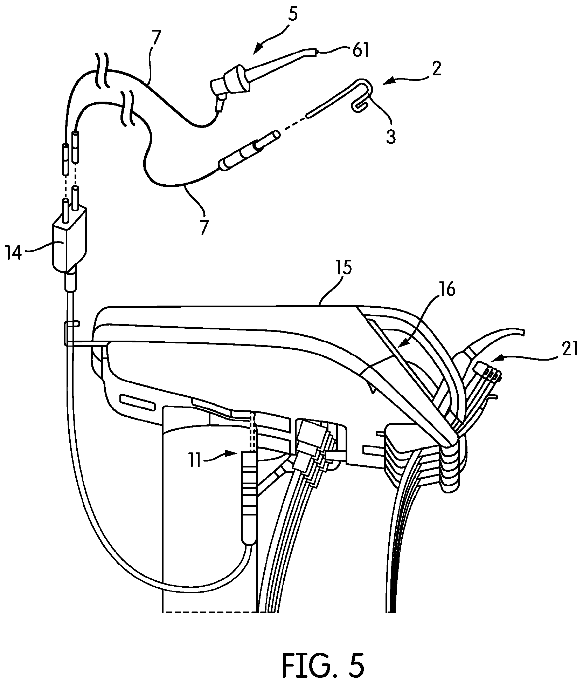

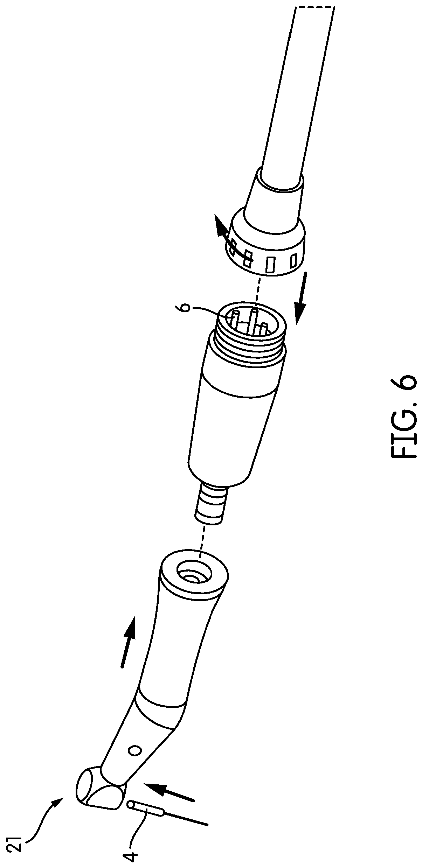

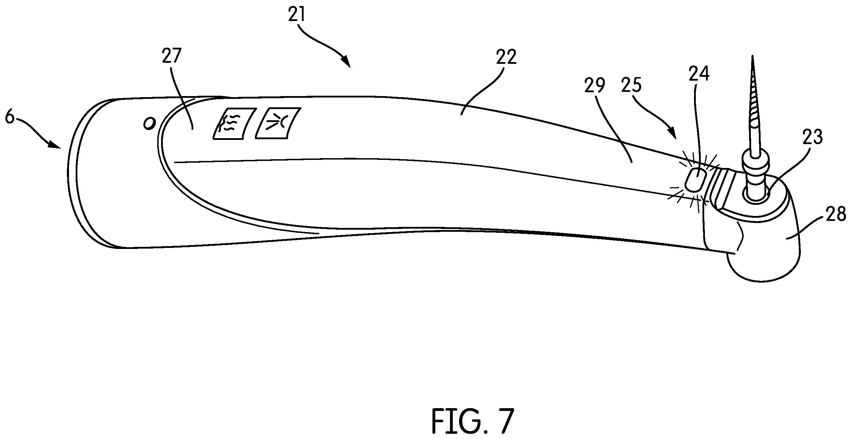

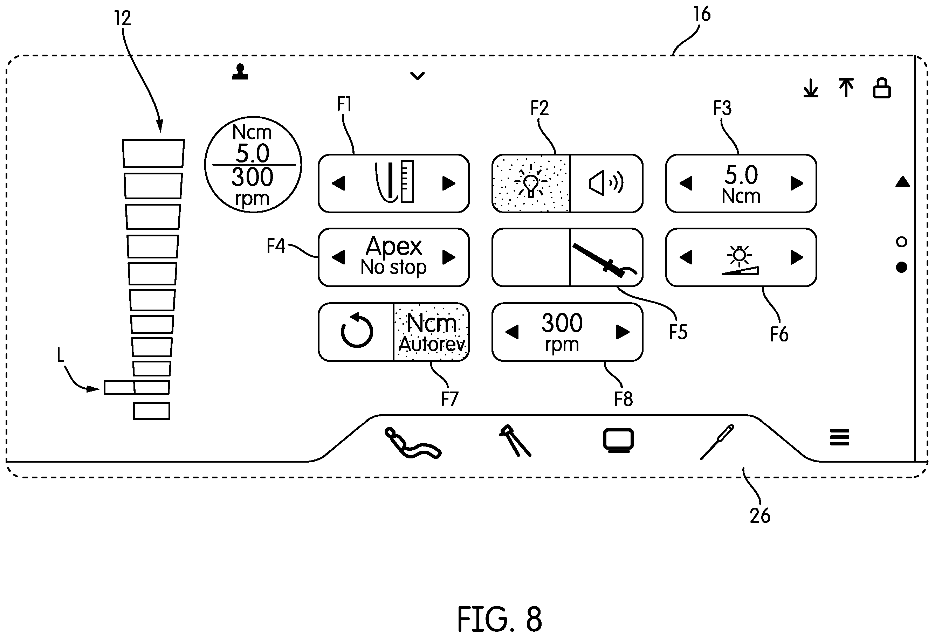

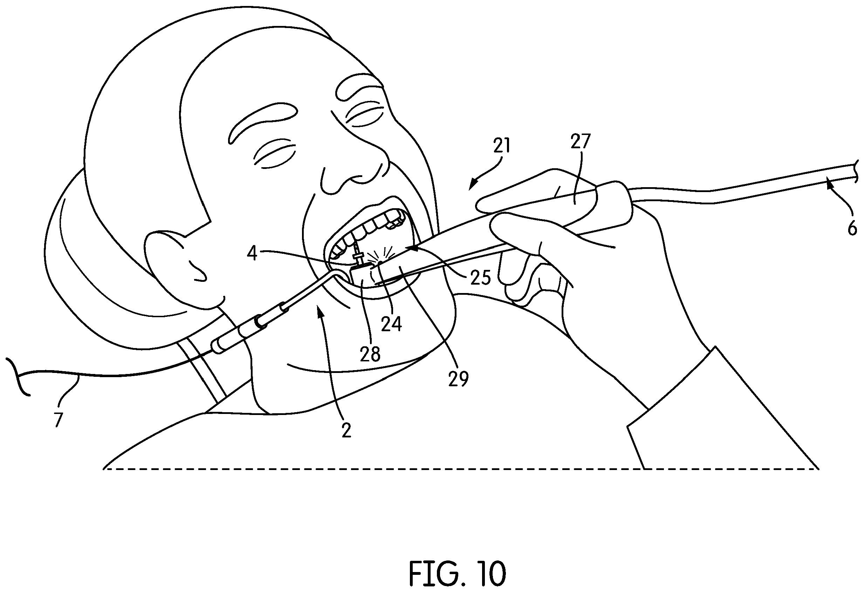

Fig. 10 shows a patient undergoing an endodontic treatment according to the first endodontic treatment mode. Herein the dentist uses a lip clip (2) and a motorized handheld dental device (21) (hereinafter also referred to as instrument) having an endodontic file (4). As shown in more detail in Fig. 5, the lip clip (2) of the dental treatment system (13) comprises a first electrode (3) attachable to the lip of the patient. The lip clip (2) can be electrically connected to a connector means (14) on the dentist's tray (15). As shown in more detail in Fig. 5, the motorized handheld dental device (21) used in the first endodontic treatment mode can be removed from the dentist's tray (15) to activate the first dialog shown in Fig 8. The dentist's tray (15) comprises sensors for detecting the removal of the instruments. The first dialog will be explained later in more detail. As shown in more detail in Fig.7, the motorized handheld dental device (21) has a housing (22) which includes a rotating hub (23) for receiving/rotating the endodontic file (4) to be inserted in the root canal of the tooth of the patient. The hub (23) is also adapted for use with other dental tools for drilling, screwing, excavation, polishing and the like. As shown in Fig. 6, the housing (22) also includes a second electrode (6) electrically in connection with the rotating hub (23). As shown in more detail in Fig.7, the housing (22) further includes an illuminating means (24) in the proximity of the rotating hub (23) and adapted to emit visible light (25). The illuminating means (24) is located such that it projects light onto the working area in the oral cavity which is faced by the rotating hub (23). Thereby, the root canal of the tooth can be illuminated. The illuminating means (24) is mounted into the housing (22) at a location such that it illuminates the endodontic file (4), in particular the distal end of the endodontic file (4). The illuminating means (24) has one more LEDs (24). Each LED may be a white-color LED, a single-color LED, or a multi-color LED that can emit white light or different colored lights in accordance with the driving signal.

As shown in Fig. 7 and Fig. 10, the housing (22) has a grip portion (27) which can be held by the practitioner; a head portion (28) which includes the rotating hub (23); and a neck portion (29) disposed between the grip portion (27) and the head portion (28). The grip portion (27) can be preferably detached from the neck portion (28) and provided in form of a coupling device. Alternatively, the grip portion (29) can be integrally provided with the neck portion (28).

As shown in Fig. 7. the illuminating means (24) is mounted into the neck portion (29) on a side facing the working area. Alternatively, in an embodiment which is not shown the illuminating means (24) can be mounted into the head portion 28 on a side facing the working area.

In an embodiment which is not shown, the LED may be further additionally optically coupled with a fiber optical element (not shown) to diffuse at least of part of the light emitted by the LED towards the practitioner/user. The fiber optical element may have an arch shape or a ring-like shape. The fiber optical element can be arranged around the neck portion. Alternatively, or additionally the fiber optical element can be arranged around head portion. The fiber optical element may be arranged such that it at least partially illuminates the endodontic file (4).

As shown in Fig. 4 (see dashed lines), the dental treatment system (13) has an integrated apex locator (1) which includes an electrical measurement unit (8) connectable to the lip clip (2) via the connector means (14), and to the motorized handheld dental device (21) via the second electrode (6). The electrical measurement unit (8) is adapted to locate the apex of the tooth based on the measurement of the electrical impedance between the first electrode (3) and the said second electrode (6). The integrated apex locator (1) further includes an optical output unit (10) adapted to output a signal indicative of the located apex. The signal is communicated to the illuminating means (24) through the wiring in the hose of the instrument (21). The signal drives the one or more LEDs of the illuminating means (24). The wiring also conducts signals for driving the motor of the instrument (21). The signal changes the illumination state of illuminating means (24) of the instrument (21) in accordance with the distance of the endodontic file (4) to the apex. As shown in Fig. 10, the dentist can easily monitor the illumination state during the endodontic treatment while looking at the root canal. The apex locator (1), in particular the electrical measurement unit (8) and the optical output unit (10) are arranged in the dentist's tray (15).

Alternatively, these can be arranged into the base of the chair (17) or any other parts of dental treatment system (13).

In the subsequent description the first dialog appearing on the graphical user interface (16) as shown in Fig. 8 during the first endodontic treatment mode will be explained in more detail according to an embodiment. The dentist can activate the endodontic treatment modes by touching the endodontic file icon on the taskbar (26). The first dialog appears on the graphical user interface (16) when the dentist removes the motorized handheld dental device (21) from the dentist's tray (15). As shown in the first dialog, the dentist may perform various settings through using the fields F1 to F8. Some of these setting will be explained in the subsequent description. By means of F1, the proximity level (L) of the apex location can be adjusted. For the adjustment, the icon shown with L is set so as to point to the last illuminating box or any other one of the preceding illuminating boxes in order to safely prevent that the endodontic file (4) being advanced beyond the apex. By means of F2 the dentist can activate the use of the illumination means (24 ) and/or the loudspeaker (11). By means of F3, the dentist can adjust the torque of the instrument motor, and consequently the maximum torque of the endodontic file (4). By means of F4, the dentist can adjust whether the instrument motor stops rotating, or continues rotating or reverses rotation direction when the proximity level (L) is reached. F5 allows to switch over into the second endodontic treatment mode which will be described later. F6 shows intensity settings of the illuminating means (24). By means of F7, the rotation direction of the instrument motor can be set, and the rotational states such as reversed rotation or stopping of the instrument motor can be adjusted when the set torque in F3 is reached. By means of F8, the rotational speed of the instrument motor, and consequently the rotational speed of the endodontic file (4) can be set.

### The second endodontic treatment mode and a second dialog

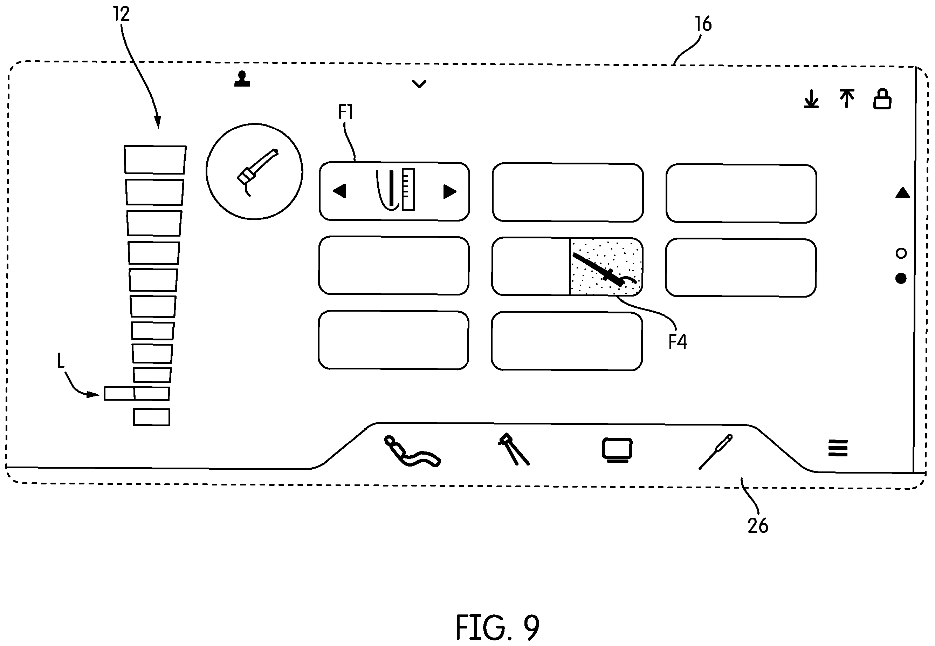

Fig. 9 shows a second dialog on the graphical user interface (16) during the second endodontic treatment mode according to an embodiment. The dentist can activate the endodontic treatment modes by touching the endodontic file icon on the taskbar (26). The second dialog appears on the on the graphical user interface (16) when the dentist doesn't remove the motorized handheld dental device (21) from the dentist's tray (15) or touches F4. In the second endodontic treatment mode the endodontic file (4) is directly hold by the dentist without using the motorized handheld dental device (21). In the second endodontic treatment mode, the lip clip (2) is connected to the dental treatment system (13) via the connector means (14). And the dentist also uses an endodontic file clip (5) that is attachable to endodontic file (4). In this embodiment, the dental treatment system (13) has an acoustical output unit (9) with a loudspeaker (11) as shown in Fig. 5. The loudspeaker (11) or the display (12) on the graphical user interface (16) of the dentist's tray (15) can be selectively used to monitor the location of the apex in lieu of the illuminating means (24) of the instrument (21) as in the first endodontic treatment mode. The endodontic file clip (5) has a second electrode (61). The electrical measurement unit (8) is adapted to locate the apex of the tooth based on the measurement of the electrical impedance between the first electrode (3) and the said second electrode (61) as shown in Fig. 6. As shown in the second dialog, the dentist may perform various settings. During the second endodontic treatment mode, the illuminating boxes are gradually highlighted from top to bottom in the display (12) as the endodontic file (4) is advanced in the root canal. Thus, the display (12) serves not only to indicate the apex location during the second endodontic treatment but can also be used to set the proximity level (L) allowed to reach the apex.

In alternative embodiments (not shown), the illumination means (24) may have various different configurations. It can be provided at least partly or entirely around the hub (23) or on the front, back, or lateral sides of the tapering part the housing (22).

## Claims

1. A dental treatment system (13) for locating the apex of a tooth of a patient, the system comprising:
a lip clip (2) having a first electrode (3) attachable to the lip of the patient;
a motorized handheld dental device (21) having a housing (22) which comprises: a rotating hub (23) for receiving an endodontic file (4) to be inserted in the root canal of the tooth of the patient; a second electrode (6) connected to the rotating hub (23); and an illuminating means (24) which is adapted to emit visible light (25) and mounted into the housing (22) at a location such that it can illuminate in the direction of the distal end of the endodontic file (4) to illuminate the working area in the oral cavity;
an electrical measurement unit (8) which is connectable to both the lip clip (2) and the motorized handheld dental device (21), and further adapted to locate the apex of the tooth based on a measurement of the electrical impedance between the first electrode (3) and the second electrode (6); and
an optical output unit (10) adapted to output a signal indicative of the located apex, based on the measurement of the electrical measurement unit (8), wherein the signal changes the illumination state of illuminating means (24) in accordance with the distance of the endodontic file (4) to the apex.

2. The dental treatment system (13) according to claim 1, **characterised in that** the illumination state includes at least one of the on/off state of the illuminating means (24), the intensity of the visible light (25) emitted by the illuminating means (24), and the color of the visible light (25) emitted by the illuminating means (24).

3. The dental treatment system (13) according to claim 1 or 2, **characterized in that** the housing has a grip portion (27); a head portion (28) which includes the rotating hub (23); and a neck portion (29) between the grip portion (27) and the head portion (28), wherein the illuminating means (24) is mounted into the neck portion (29).

4. The dental treatment system (13) according to any one of claims 1 to 3, **characterized in that** the illuminating means (24) has one or more LEDs.

5. The dental treatment system of any of claims 1 to 4, wherein the illuminating means (24) is configured to illuminate the root canal of the tooth.

6. The dental treatment system of any of claims 1 to 5, wherein the change in state comprises an on/off state or a flashing frequency.

7. The dental treatment system of any of claims 1 to 5, wherein the change in state comprises a change in intensity or a change in color.

8. The dental treatment system of any of claims 1 to 7, wherein the illuminating means (24) is mounted into the housing (22) on a side facing the working area.

9. The dental treatment system of any of claims 1 to 7, wherein the illuminating means (24) is mounted into the housing (22) in proximity to the rotating hub (23).

10. The dental treatment system of claim 9, wherein the illuminating means (24) surrounds the rotating hub (23).

11. The dental treatment system of any of claims 1 to 10, further comprising a fiber optic element to diffuse at least part of the light emitted by the illumination means.

## Patentansprüche

1. Zahnbehandlungssystem (13) zum Auffinden der Spitze eines Zahnes eines Patienten, wobei das System Folgendes umfasst:
einen Lippenclip (2), der eine erste Elektrode (3) aufweist, die an der Lippe des Patienten anbringbar ist;
eine motorisierte, handgehaltene zahnmedizinische Vorrichtung (21) mit einem Gehäuse (22), das Folgendes umfasst: eine rotierende Nabe (23) zum Aufnehmen einer endodontischen Feile (4), die in den Wurzelkanal des Zahnes des Patienten eingeführt werden soll; eine zweite Elektrode (6), die mit der rotierenden Nabe (23) verbunden ist; und ein Beleuchtungsmittel (24), das geeignet ist, sichtbares Licht (25) zu emittieren und in das Gehäuse (22) an einer Stelle montiert ist, sodass es in der Richtung des distalen Endes der endodontischen Feile (4) beleuchten kann, um den Arbeitsbereich in der Mundhöhle zu beleuchten;
eine elektrische Messeinheit (8), die sowohl mit dem Lippenclip (2) als auch der motorisierten handgehaltenen zahnmedizinischen Vorrichtung (21) verbunden werden kann und ferner geeignet ist, die Spitze des Zahnes auf Grundlage einer Messung der elektrischen Impedanz zwischen der ersten Elektrode (3) und der zweiten Elektrode (6) aufzufinden; und
eine optische Ausgabeeinheit (10), die geeignet ist, ein Signal, das für den aufgefundenen Scheitelpunkt bezeichnend ist, auf Grundlage der Messung der elektrischen Messeinheit (8) auszugeben, wobei das Signal den Beleuchtungszustand des Beleuchtungsmittels (24) gemäß dem Abstand der endodontischen Feile (4) zu dem Scheitelpunkt ändert.

2. Zahnbehandlungssystem (13) nach Anspruch 1, **dadurch gekennzeichnet, dass** der Beleuchtungszustand mindestens einen von dem Ein/Aus-Zustand des Beleuchtungsmittels (24), der Intensität des von dem Beleuchtungsmittel (24) emittierten sichtbaren Lichts (25) und der Farbe des von dem Beleuchtungsmittel (24) emittierten sichtbaren Lichts (25) beinhaltet.

3. Zahnbehandlungssystem (13) nach Anspruch 1 oder 2, **dadurch gekennzeichnet, dass** das Gehäuse einen Griffabschnitt (27); einen Kopfabschnitt (28), der die rotierende Nabe (23) beinhaltet; und einen Halsabschnitt (29) zwischen dem Griffabschnitt (27) und dem Kopfabschnitt (28) aufweist, wobei das Beleuchtungsmittel (24) in den Halsabschnitt (29) montiert ist.

4. Zahnbehandlungssystem (13) nach einem der Ansprüche 1 bis 3, **dadurch gekennzeichnet, dass** das Beleuchtungsmittel (24) eine oder mehrere LEDs aufweist.

5. Zahnbehandlungssystem nach einem der Ansprüche 1 bis 4, wobei das Beleuchtungsmittel (24) dazu konfiguriert ist, den Wurzelkanal des Zahnes zu beleuchten.

6. Zahnbehandlungssystem nach einem der Ansprüche 1 bis 5, wobei die Zustandsänderung einen Ein/Aus-Zustand oder eine Blinkfrequenz umfasst.

7. Zahnbehandlungssystem nach einem der Ansprüche 1 bis 5, wobei die Zustandsänderung eine Intensitätsänderung oder eine Farbänderung umfasst.

8. Zahnbehandlungssystem nach einem der Ansprüche 1 bis 7, wobei das Beleuchtungsmittel (24) in das Gehäuse (22) auf einer Seite, die dem Arbeitsbereich zugewandt ist, montiert ist.

9. Zahnbehandlungssystem nach einem der Ansprüche 1 bis 7, wobei das Beleuchtungsmittel (24) in das Gehäuse (22) in der Nähe der rotierenden Nabe (23) montiert ist.

10. Zahnbehandlungssystem nach Anspruch 9, wobei das Beleuchtungsmittel (24) die rotierende Nabe (23) umgibt.

11. Zahnbehandlungssystem nach einem der Ansprüche 1 bis 10, ferner umfassend ein faseroptisches Element, um mindestens einen Teil des von dem Beleuchtungsmittel emittierten Lichts zu streuen.

## Revendications

1. Système de traitement dentaire (13) permettant de localiser le sommet d'une dent d'un patient, le système comprenant :
une pince labiale (2) comportant une première électrode (3) pouvant être fixée sur la lèvre du patient ;
un dispositif dentaire portatif motorisé (21) comportant un boîtier (22) qui comprend : un moyeu rotatif (23) destiné à recevoir une lime endodontique (4) à insérer dans le canal radiculaire de la dent du patient ; une seconde électrode (6) reliée au moyeu rotatif (23) ; et un moyen d'éclairage (24) qui est adapté à l'émission d'une lumière visible (25) et monté dans le boîtier (22) au niveau d'un emplacement de façon qu'il puisse éclairer en direction de l'extrémité distale de la lime endodontique (4) afin d'éclairer la zone de travail dans la cavité buccale ;
une unité de mesure électrique (8) qui peut être reliée à la fois à la pince labiale (2) et au dispositif dentaire portatif motorisé (21), et qui est en outre adaptée à la localisation du sommet de la dent sur la base d'une mesure de l'impédance électrique entre la première électrode (3) et la seconde électrode (6) ; et
une unité de sortie optique (10) adaptée à l'émission d'un signal indicatif du sommet localisé, sur la base de la mesure de l'unité de mesure électrique (8), ledit signal changeant l'état d'éclairage du moyen d'éclairage (24) en fonction de la distance de la lime endodontique (4) jusqu'au sommet.

2. Système de traitement dentaire (13) selon la revendication 1, **caractérisé en ce que** l'état d'éclairage comprend au moins un état parmi l'état marche/arrêt du moyen d'éclairage (24), l'intensité de la lumière visible (25) émise par le moyen d'éclairage (24) et la couleur de la lumière visible (25) émise par le moyen d'éclairage (24).

3. Système de traitement dentaire (13) selon la revendication 1 ou 2, **caractérisé en ce que** le boîtier comporte une partie préhension (27) ; une partie tête (28) qui comprend le moyeu rotatif (23) ; et une partie col (29) entre la partie préhension (27) et la partie tête (28), ledit moyen d'éclairage (24) étant monté dans la partie col (29).

4. Système de traitement dentaire (13) selon l'une quelconque des revendications 1 à 3, **caractérisé en ce que** le moyen d'éclairage (24) comporte une ou plusieurs DEL.

5. Système de traitement dentaire selon l'une quelconque des revendications 1 à 4, ledit moyen d'éclairage (24) étant conçu pour éclairer le canal radiculaire de la dent.

6. Système de traitement dentaire selon l'une quelconque des revendications 1 à 5, ledit changement d'état comprenant un état marche/arrêt ou une fréquence de clignotement.

7. Système de traitement dentaire selon l'une quelconque des revendications 1 à 5, ledit changement d'état comprenant un changement d'intensité ou un changement de couleur.

8. Système de traitement dentaire selon l'une quelconque des revendications 1 à 7, ledit moyen d'éclairage (24) étant monté dans le boîtier (22) sur un côté faisant face à la zone de travail.

9. Système de traitement dentaire selon l'une quelconque des revendications 1 à 7, ledit moyen d'éclairage (24) étant monté dans le boîtier (22) à proximité du moyeu rotatif (23).

10. Système de traitement dentaire selon la revendication 9, ledit moyen d'éclairage (24) entourant le moyeu rotatif (23).

11. Système de traitement dentaire selon l'une quelconque des revendications 1 à 10, comprenant en outre un élément de fibre optique destiné à diffuser au moins une partie de la lumière émise par le moyen d'éclairage.
